# EUROPEAN PATENT SPECIFICATION

(11) **EP 2 698 405 B1**
(45) Date of publication and mention of the grant of the patent: **26.06.2019**
(21) Application number: 12841164.2
(22) Date of filing: 18.10.2012
(51) Int. Cl.: C09D 7/40

(54) **INSULATING PAINT, INSULATED WIRE, METHOD AND USE**
ISOLIERENDES LACK, ISOLIERTER DRAHT, VERFAHREN UND VERWENDUNG
MATÉRIAU DE REVÊTEMENT ISOLANT, FIL ISOLÉ, PROCÉDÉ ET UTLISATION

(30) Priority: 19.10.2011 JP 2011229734
(43) Date of publication of application: 19.02.2014
(73) Proprietor: Furukawa Electric Co., Ltd., Chiyoda-ku Tokyo 100-8322 (JP); Furukawa Magnet Wire Co., Ltd., Tokyo 100-0005 (JP)
(72) Inventor: OYA, Makoto, Tokyo 100-8322 (JP); ONODERA, Makoto, Tokyo 100-8322 (JP); IKEDA, Keisuke, Tokyo 100-8322 (JP); TOMIZAWA, Keiichi, Tokyo 100-0005 (JP)
(74) Representative: Forstmeyer, Dietmar
(86) International application number: PCT/JP2012/076952
(87) International publication number: WO 2013/058318

(56) References cited:
- JP-A- H05 230 400
- JP-A- H07 157 714
- JP-A- H09 106 711
- JP-A- H11 306 865
- JP-A- S62 190 261
- JP-A- 2002 008 453
- JP-A- 2003 020 409
- JP-A- 2008 081 587
- JP-A- 2010 095 649
- JP-A- 2010 153 099
- US-A- 4 154 896

## Description

### TECHNICAL FIELD

The present invention relates to insulating paint, an insulated wire, and a method of producing an insulated wire.

### BACKGROUND ART

Since from the past, an insulated wire in which a conductor is covered with an insulating film has been used in an electrical coil for various electrical equipments, such as motors and transformers. The insulated wire to form the electrical coil, is required to have adhesion to the conductor, electrical insulating property, and heat resistance. Especially in recent years, electrical equipments for aerospace use, electrical equipments for aircrafts, electrical equipments for nuclear power, electrical equipments for energy, and electrical equipments for automobiles, are required not only to be reduced in size and weight thereof but also to have higher performance. For example, transformers and rotating electrical machines, such as motors, are required to have a higher output power ever than before.

Further, in association with a trend of size reduction and weight reduction of equipment in recent years, a smaller and lighter, and higher performance one has been required also for the rotating electrical machine. In order to meet this requirement, winding of a larger amount of insulated wires is required around a motor core. In order to squeeze the largest possible amount of insulated wires into a slot of the core, a demand is increasingly grown for improving adhesion of the insulating film of the insulated wire. Thus, suppression is required with regard to a decrease in adhesion force due to formation of an oxide film after exposure to a high temperature.

As insulating paint containing a thermosetting resin, which has been used for preparation of the insulating film so far, a large number of reports are made on those having improved adhesion properties of the insulating film in a step for forming the insulating film onto the conductor. However, in the insulating paint as reported, adhesion properties at an initial stage can be achieved. However, when the insulated wire is exposed to a high temperature condition over a long time, keeping of the adhesion properties between the conductor and the insulating film has been difficult. Further, an effect of an improvement in the adhesion properties by the conventional insulating paint as described above is produced only as long as the insulating paint is directly come in contact with the conductor. If devising of a film structure is tried in order to improve other characteristics such as mechanical strength required for the insulated wire, a disadvantage of a limited constitution has been caused.

Consequently, attempts have been made for adding a component (adhesion-improving agent) for improving the adhesion properties of the insulating film with a metallic conductor to improve the mechanical strength of the insulating film, thereby also improving windability of the insulated wire (for example, see Patent Literatures 1 to 4). The adhesion-improving agent is generally added by several percent based on a resin. Such an insulated wire can keep the adhesion force of the insulating film with the metallic conductor. However, when the adhesion-improving agent is added to the paint, heat resistance of the insulating film per se may occasionally become insufficient. Thus, when the mechanical strength decreases due to heat history such as heating during coil winding, windability of the insulated wire deteriorates to damage the insulating film, and a problem of decreased insulating characteristics arises.

As described above, as a means for improving the adhesion properties of the insulating film with the conductor, no means has been disclosed so far for positively utilizing occurrence of a chemical reaction onto the conductor by an additive contained in the film or by a remaining solvent component after baking the insulating paint onto the conductor.

### CITATION LIST

### PATENT LITERATURES

Patent Literature 1: JP-A-8-218007 ("JP-A" means unexamined published Japanese patent application)
Patent Literature 2: WO 2009/048102
Patent Literature 3: JP-A-2009-9824
Patent Literature 4: JP-A-2009-123403

JP 2010 095649 (A) discloses a resin composition for electric insulation and an enameled wire comprising the same, wherein said resin composition comprises a polyesterimide resin having an isocyanurate ring in the molecular chain and certain compounds, and provides a coating film excellent in adhesiveness with a conductor and in wear resistance. The enamel wire is obtained by applying and baking the resin composition on a wire.

US 4,154,896 discloses a solventless, low viscosity, photosensitive, oil free insulating composition, consisting essentially of a 100 wt.% solids blend of: (1) an oil free copolymer consisting of: (A) about 40 wt.% to about 90 wt.% of an alkyd component, and (B) about 10 wt.% to about 60 wt.% of an acrylate monomer selected from the group consisting of polyacrylate monomers and monoacrylate monomers, where the weight ratio of polyacrylate monomer:monoacrylate monomer is from 10:0 to 9:1, and (C) an effective amount of a catalyst effective to act as a condensation reaction promoter and (2) about 2 parts to about 10 parts for each 100 parts of copolymer of a photoinitiator effective to initiate polymerization of the composition with ultraviolet light exposure, and (3) an effective amount of an inhibitor effective to prevent gellation of the insulating composition at 26 °C; said composition characterized by having 100 wt.% solids, a viscosity of up to about 2,000 cps. at 25 °C and the capability of forming an ultraviolet radiation cured, hard, thin insulating film without the application of heat.

JP-H11-306865 discloses an insulated wire with a fused film as an outermost layer, which fused film is formed by a coating material consisting of a polyamide resin and an antioxidant dissolved in an organic solvent, wherein the antioxidant is a phenolic antioxidant and set to 0.3 pts.wt. or more and 5.0 pts.wt. or less with respect to 100 pts.wt. of the polyamide resin.

JP 2002 008453 discloses an insulated wire with a fusion bonding layer including a crystalline copolymerization polyamide resin, where relative viscosity of a metacresol solution of 0.5 wt.% is 1.4-1.6 at 25 °C, the melting point of which ranges from 105 to 150 °C, and, optionally, the layer includes a nylon resin having high melting point ranging from 200 to 300 °C and/or an antioxidant.

JP-H07-157714 discloses a polyurethane coating material and an insulated wire, wherein the coating material is produced by compounding a polyurethane coating material with one or more kinds of active hydrogen compounds selected from n-amyl alcohol, n-hexanol, n- heptanol, n-octanol, 4-methyl-2-pentanol, 2-heptanol, 2-octanol, dibutylamine, diisobutylamine, tripentylamine, aniline, toluidine and cyclohexylamine.

### SUMMARY OF INVENTION

### TECHNICAL PROBLEM

The present invention provides insulating paint that can form an insulating film having adhesion properties with a conductor and having excellent heat resistance.

Further, the present invention provides an insulated wire in which adhesion force of the insulating film does not decrease even upon exposure to a high temperature condition for a long time.

Still further, the present invention provides a method of producing the insulated wire described above.

### SOLUTION TO PROBLEM

In view of the problems as described above, the present inventors diligently continued to conduct research on a method of producing an insulated wire that can keep adhesion force of an insulating film with a metallic conductor even under a high temperature condition by incorporating a specific reducing agent into the insulating film of the insulated wire, thereby suppressing formation of an oxide film on a conductor surface. As a result, the present inventors found that, when an insulating film is formed using insulating paint prepared by incorporating a specific reducing agent that is uniformly dispersed into a solvent component of a resin composition constituting the insulating film, and has a sufficiently high boiling point of the reducing agent, oxidization of a conductor after heat treatment can be prevented by a reducing agent remaining in the film after a baking step, thereby avoiding adversely affecting characteristics of the insulating film, and thus an insulated wire having excellent heat resistance for a long time can be prepared. The present invention is attained, based on those findings.

The present invention is provided by claims 1 to 18.

### ADVANTAGEOUS EFFECTS OF INVENTION

According to the insulating paint of the present invention, an insulating film that keeps adhesion properties with a conductor, and has excellent heat resistance can be formed.

Moreover, the insulated wire of the present invention produces an excellent effect of causing no decrease in adhesion force of the insulating film with the conductor even upon exposure to a high temperature condition for a long time.

Further, the method of producing an insulated wire according to the present invention can provide an insulated wire that causes no decrease in the adhesion force of the insulating film with the conductor even upon exposure to the high temperature condition for a long time.

Moreover, as a heat resistance test of the insulated wire, heat treatment is applied in a region of a temperature higher than a temperature in an actual use condition. The insulated wire of the present invention can withstand such a test. Therefore, according to the present invention, a highly reliable insulated wire can be provided.

### BRIEF DESCRIPTION OF THE DRAWINGS

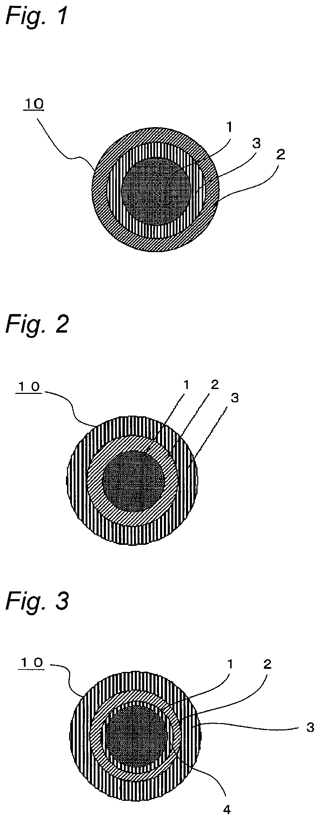

{Fig. 1}
   Fig. 1 is a cross-sectional view showing an embodiment of the insulated wire of the present invention.
{Fig. 2}
   Fig. 2 is a cross-sectional view showing another embodiment of the insulated wire of the present invention.
{Fig. 3}
   Fig. 3 is a cross-sectional view showing further another embodiment of the insulated wire of the present invention.
{Fig. 4}
   Fig. 4 is a cross-sectional view showing further another embodiment of the insulated wire of the present invention.
{Fig. 5}
   Fig. 5 is a cross-sectional view showing further another embodiment of the insulated wire of the present invention.

### MODE FOR CARRYING OUT THE INVENTION

The present invention will be explained, with reference to the drawings. However, the present invention is not limited to these.

In the present specification, the term "reducing agent" means a generic term for a reductive substance that suppresses, according to a reduction reaction, formation of an oxide film formed by a reaction of an insulated wire with oxygen in a metallic conductor even under a high temperature condition over a long time. The present inventors found that, when a surface of the metallic conductor is consistently kept in a normal state with the reducing agent, constant adhesion force of an insulating film can be kept even after heat treatment.

Figs. 1 to 5 each are a schematic cross-sectional view showing a preferred embodiment of the insulated wire of the present invention. As can be seen in Figs. 1 to 5, in an insulated wire 10 of the present invention, an outer circumference of a conductor 1 is provided with an insulating film 2 containing a reducing agent. Herein, the insulating film 2 containing a reducing agent may be arranged directly in a periphery of the conductor 1 as shown in Figs. 2, 4 and 5, or may also be arranged on the conductor 1 through any other layer such as a layer 4 containing an adhesion-improving agent as shown in Fig. 3. Further, an insulating film 3 containing no reducing agent, or the like may also be arranged between the conductor 1 and the insulating film 2 containing a reducing agent, outside the insulating film 2 containing a reducing agent, or the like as shown in Figs. 1 to 3 and 5. That is, according to the present invention, a layer (film) in which the reducing agent is contained may be formed directly on the conductor, or in the periphery of the conductor through any other layer.

In the insulating paint of the present invention, a specific reducing agent is uniformly dispersed into a solvent component of a resin composition constituting the insulating film. The solvent component used in the present invention is not particularly limited. Specific examples include an amide-series solvent such as N-methyl-2-pyrrolidone, N,N-dimethylacetamide, and N,N-dimethylformamide; a urea-series solvent such as N,N-dimethylethyleneurea, N,N-dimethylpropyleneurea, and tetramethylurea; a lactone-series solvent such as γ-butyrolactone and γ-caprolactone; a carbonate-series solvent such as propylene carbonate; a ketone-series solvent such as methyl ethyl ketone, methyl isobutyl ketone, and cyclohexanone; and a sulfone-series solvent such as sulfolane. Among these, in view of high solubility, high reaction promotion properties or the like, an amide-series solvent or a urea-series solvent is preferred; and in view of having no hydrogen atom that easily inhibits a crosslinking reaction due to heating or the like, N-methyl-2-pyrrolidone, N,N-dimethylacetamide, N,N-dimethylethyleneurea, N,N-dimethylpropyleneurea or tetramethylurea is further preferred, and N-methyl-2-pyrrolidone is particularly preferred.

In the present invention, in order to avoid complete evaporation of the reducing agent when the insulating paint is applied and baked onto the conductor, one having a boiling point of 160°C or higher (preferably 180°C or higher, further preferably 210°C or higher, preferably 290°C or lower, further preferably 250°C or lower, preferably 180°C to 290°C, and further preferably 210°C to 250°C) is used. If the boiling point of the reducing agent is lower than 160°C, reactivity of the reducing agent is high. Therefore, the reducing agent causes reaction with low molecular weight components, in a temperature region in which the low molecular weight components constituting a thermosetting resin polymerize with each other and are hardened, thereby inhibiting a polymerization reaction of the thermosetting resin, resulting in incomplete hardening by baking to cause a decrease in strength of the insulating film.

When one having the boiling point of 160°C or higher is used as the reducing agent, the reducing agent can be properly mixed into the thermosetting resin without complete evaporation of the reducing agent or without reaction with the components of the thermosetting resin. Such a reducing agent is not particularly limited, as long as the reducing agent is compatible with a resin that can form the insulating film by application and baking, and suppresses formation of the oxide film on the conductor. Specific examples include an organic compound such as alcohols, polyols, aldehydes, thiols, hydroquinones, and saccharides. Moreover, the reducing agent is preferably oxidized in the range of 150°C or higher and 250°C or lower. The reducing agent may be in a solid state or a liquid state in a standard state (23°C).

When a primary alcohol, a secondary alcohol, a primary thiol, or a secondary thiol is oxidized, these each are converted into a carboxylic acid, a carbonyl group, a sulfinic acid, or a thiocarbonyl group to allow reduction of the conductor. In the reduction of the conductor, the reaction is particularly promoted when the conductor is placed under a thermal environment to allow maintenance of adhesion force between the conductor and the insulating film upon exposure to the high temperature condition for a long time.

Alcohols that can be used in the present invention are not particularly limited. Specific examples include, among terpenes such as monoterpene (the number of carbon atoms: 10), sesquiterpene (the number of carbon atoms: 15), diterpene (the number of carbon atoms: 20), sesterterpene (the number of carbon atoms: 25), triterpene (the number of carbon atoms: 30), and tetraterpene (the number of carbon atoms: 40), terpenoid having a hydroxy group (e.g., geraniol, linalool, farnesol, picrotoxin, phorbol anisatin, linalool, glycyrrhetinic acid, terpineol, carveol, citronellol, and terpineol); a saturated alcohol such as anise alcohol, benzyl alcohol, dihydromyrcenol, dimethylbenzyl carbinol, dipropylene glycol, dodecanol, fenchyl alcohol, 3-methoxy-3-methylbutanol, octanol, 3-(5-isocamphyl)-cyclohexanol, tetrahydrolinalool, hexanol, and 2-t-butylcyclohexanol; and an unsaturated alcohol such as citronellol, farnesol, nerol, 2-phenylethyl alcohol, ascorbic acid, phenylethyldimethyl carbinol, 2-methyl-4-(2,2,3-trimethyl-3-cyclopentene-1-yl)-2-butene-1-ol, santalol, carveol, citronellol, terpineol, cinnamic alcohol, and cis- 3-hexenol. In the present invention, these alcohols may be used alone in one kind or in combination with two or more kinds.

Polyols that can be used in the present invention are not particularly limited. Specific examples include diols such as ethylene glycol, diethylene glycol, triethylene glycol, tetraethylene glycol, 1,2-propanediol, dipropylene glycol, 1,2-butanediol, 1,3-butanediol, 1,4-butanediol, 2,3-butanediol-1,5-pentanediol, and polyethylene glycol. In the present invention, these diols may be used alone in one kind or in combination with two or more kinds. Among these diols, diols having hydroxy groups at both ends are further preferred, and in view of excellent power of dissolving the thermosetting resin, tetraethylene glycol is still further preferred.

Aldehydes that can be used in the present invention are not particularly limited. Specific examples include perillaldehyde, citronellal, geranial, and neral. Among these, in view of stability of varnish in the presence of oxygen, or solubility in a solvent, geranial or neral is further preferred. These aldehydes may be used alone in one kind or in combination with two or more kinds.

Thiols that can be used in the present invention are not particularly limited. Specific examples include aliphatic thiols such as octanethiol, decanethiol, dodecanethiol, and octadecanethiol; polythiols such as bis(2-mercaptoethyl)sulfide, bis(2,3-dimercaptopropyl)sulfide, 1,2-bis(2-mercaptoethylthio)ethane, 2-(2-mercaptoethylthio)-1,3-dimercaptopropane, 1,2-bis(2-mercaptoethylthio)-3-mercaptopropane, 4-mercaptomethyl-1,8-dimercapto-3,6-dithiaoctane, 2,4-bis(mercaptomethyl)-1,5-dimercapto-3-thiapentane, 4,8-bis(mercaptomethyl)-1,11-dimercapto-3,6,9-trithiaundecane, 4,7-bis(mercaptomethyl)-1,11-dimercapto-3,6,9-trithiaundecane, 5,7-bis(mercaptomethyl)-1,11-dimercapto-3,6,9-trithiaundecane, 1,2,7-trimercapto-4,6-dithiaheptane, 1,2,9-trimercapto-4,6,8-trithianonane, 1,2,8,9-tetramercapto-4,6-dithianonane, 1,2,10,11-tetramercapto-4,6,8-trithiaundecane, 1,2,12,13-tetramercapto-4,6,8,10-tetrathiatridecane, tetrakis(4-mercapto-2-thiabutyl)methane, tetrakis(7-mercapto-2,5-dithiaheptyl)methane, 1,5-dimercapto-3-mercaptomethylthio-2,4-dithiapentane, 3,7-bis(mercaptomethylthio)-1,9-dimercapto-2,4,6,8-tetrathianonane, 1,1,3,3-tetrakis(mercaptomethylthio)propane, 2,5-bis(mercaptomethyl)-1,4-dithiane,2,5-bis(2-mercaptoethyl)-1,4-dithiane, 2,5-bis(mercaptomethyl)-1-thiane, 2,5-bis(2-mercaptoethyl)-1-thiane, bis(4-mercaptophenyl)sulfide, bis(4-mercaptomethylphenyl)sulfide, and 3,4-thiophenedithiol; and thiols such as oligomers including a dimer to an icosamer of these. Among these, in view of solubility in a solvent, and resistance to deterioration in air, dodecanethiol or 4,7-bis(mercaptomethyl)-1,11-dimercapto-3,6,9-trithiaundecane is further preferred. These thiols may be used alone in one kind or in combination with two or more kinds.

Hydroquinones that can be used in the present invention are not particularly limited. Specific examples include hydroquinone, monomethyl hydroquinone, monoethyl hydroquinone, 2,3-dimethyl hydroquinone, 2,5-dimethyl hydroquinone, and 2,6-dimethyl hydroquinone, and a hydroquinone compound (e.g., 3-methyl-4-hydroxyphenyl valerate, 3-methyl-4-hydroxyphenyl decanoate, 3-methyl-4-hydroxyphenyl oleate, 3-ethyl-4-hydroxyphenyl octanoate, 3-ethyl-4-hydroxyphenyl oleate, 3-propyl-4-hydroxyphenyl myristate, 3-propyl-4-hydroxyphenyl palmitoleate, 3-isopropyl-4-hydroxyphenyl palmitate, 3-isopropyl-4-hydroxyphenyl myristoleate, 3-butyl-4-hydroxyphenyl laurate, 3-butyl-4-hydroxyphenyl linoleate, 3-isobutyl-4-hydroxyphenyl valerate, 3-isobutyl-4-hydroxyphenyl linolenate, 3-sec-butyl-4-hydroxyphenyl stearate, 3-sec-butyl-4-hydroxyphenyl myristoleate, 3-tert-butyl-4-hydroxyphenyl valerate, 3-tert-butyl-4-hydroxyphenyl decanoate, 3-tert-butyl-4-hydroxyphenyl oleate, 3-pentyl-4-hydroxyphenyl octanoate, and 3-pentyl-4-hydroxyphenyl linolenate). Among these, from a viewpoint of solubility in a solvent, hydroquinone or monoethyl hydroquinone is further preferred. These hydroquinones may be used alone in one kind or in combination with two or more kinds.

Saccharides that can be used in the present invention include monosaccharides and polysaccharides. Specific examples include allose, altrose, glucose, fructose, lactose, mannose, gulose, idose, galactose, and talose. These saccharides may be used alone in one kind or in combination with two or more kinds. Among these saccharides, in view of a general-purpose substance and inexpensiveness, glucose is preferably used.

Carboxylic acid that can be used in the present invention is not particularly limited. Specific examples include oxalic acid that is converted into formic acid having a formyl group (aldehyde) when decomposed at a high temperature, and ascorbic acid that has a hydroxy group.

The reducing agent that is used in the present invention preferably develops reduction action actively at a high temperature of 180°C or higher. From such a viewpoint, as the reducing agent that is used in the present invention, a compound having a reductive hydroxy group is preferred.

Moreover, as the reducing agent that is used in the present invention, a compound having a certain degree of molecular weight is preferred so as to avoid complete decomposition or evaporation of the reducing agent even if the insulating paint is applied and baked onto the conductor. From such a viewpoint, as the reducing agent that is used in the present invention, a compound having 10 or more carbon atoms (preferably 15 or less carbon atoms, further preferably 12 or less carbon atoms, preferably 10 to 15 carbon atoms, and further preferably 10 to 12 carbon atoms) in one molecule of the reducing agent is preferred.

Further, as an organic reducing agent that can be used in the present invention, a compound having a high boiling point and sufficient ability of dissolving a thermosetting resin oligomer is preferred. From such a viewpoint, as the reducing agent that is used in the present invention, terpenoid having a hydroxy group is preferred, in which volatility is high due to having an unsaturated hydrocarbon group to show reducing properties only when the compound is gasified.

In the present invention, the reducing agents may be used alone in one kind or in combination with two or more kinds.

The content of the reducing agent in the insulating paint according to the present invention can be appropriately set up depending on a kind of reducing agent, but is preferably 1% by mass or more (preferably 2% by mass or more), 30% by mass or less (preferably 15 % by mass or less, and further preferably 10% by mass), or from 1% to 30% by mass, preferably from 1% to 15% by mass, and further preferably from 2% to 10% by mass, based on solid content of the resin. If the content of the reducing agent based on solid content of the resin is too small, a whole of the reducing agent evaporates during baking, and production of an effect thereof becomes difficult. On the other hand, if the content of the reducing agent is too large based on solid content of the resin, ability of dissolving solid content of the resin decreases to cause difficulty in progressing a hardening reaction of the thermosetting resin, or to cause precipitation of the thermosetting resin, or the like, thereby deteriorating the stability of varnish, and thus decreasing strength of the insulating film.

A resin that can form the insulating film, to be used in the present invention, is not particularly limited. From a viewpoint of heat resistance, a thermosetting resin such as a polyester resin, a polyimide resin, a polyesterimide resin and a polyamidoimide resin is preferably used. In the present invention, the thermosetting resins may be used alone in one kind or in combination with two or more kinds.

The polyester resin that can be used in the present invention is not particularly limited. Examples of the polyester resin include ones made of an aromatic polyester modified by adding a phenol resin or the like. Specific examples thereof include a polyester resin whose heat resistance is of an H-class. Examples of the commercially available H-class polyester resin include Isonel 200 (trade name, manufactured by Schenectady International, Inc.).

The polyimide resin that can be used in the present invention is not particularly limited. Specific examples include an ordinary polyimide resin such as thermosetting aromatic polyimide, and such as one using a polyamide acid solution obtained by allowing aromatic tetracarboxylic dianhydride to react with aromatic diamines in a polar solvent to allow imidization by heat treatment upon forming the insulating film, thereby allowing thermal hardening. Specific examples of a commercially available polyimide resin include U-Varnish (trade name, manufactured by Ube Industries, Ltd.), and U Imide Varnish (trade name, manufactured by Unitika Ltd.).

The polyamideimide resin that can be used in the present invention is not particularly limited. Specific examples include one obtained by allowing diisocyanates to directly react with tricarboxylic anhydride in a polar solvent, or one obtained by mixing diamines to tricarboxylic anhydride to allow amidization with diisocyanates. Examples of a commercially available polyamideimide resin include HI406 (trade name, manufactured by Hitachi Chemical Co., Ltd.).

The polyester resin that can be used in the present invention is not particularly limited. Specific examples of a commercially available polyester imide resins include Neoheat 8200K2, Neoheat 8600, and LITON 3300 (trade names, manufactured by Totoku Toryo Co., Ltd.).

To the insulating paint of the present invention, various kinds of additives may be blended, such as a crystallization nucleating agent, a crystallization accelerating agent, a foam nucleating agent, an oxidation inhibitor, an antistatic agent, an anti-ultraviolet agent, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickening agent, a thinning agent, and an elastomer; an adhesion-improving agent such as a melamine resin and an epoxy resin, an inorganic oxide filler for improving film strength, a resin filler, or a mineral such as talc may also be blended, within the range in which advantageous effects of the present invention are not adversely affected.

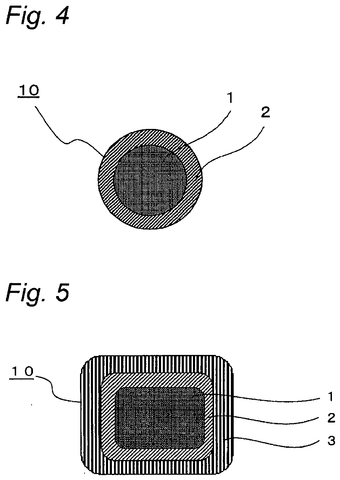

Examples of the conductor 1 for use in the insulated wire of the present invention include those having been ordinary used as a conductor of an insulated wire, such as copper, a copper alloy, aluminum, an aluminum alloy, or a combination of those. Moreover, a cross-sectional shape of the conductor 1 is not particularly limited. For example, the conductor may be of a circular shape in its cross section, as shown in Figs. 1 to 4, or may be of a rectangular shape in its cross section, having rounded corners, as shown in Fig. 5.

The insulated wire of the present invention is provided by forming one layer or two or more layers of the insulating films by applying and baking, onto the conductor, the insulating paint containing the resin that can form the insulating film. Herein, the reducing agent having the boiling point of 160°C or higher is contained in at least one layer of the insulating films. When the reducing agent contained in the insulating film suppresses growth of the oxide film to be generated on the conductor in the high temperature condition, the adhesion properties of the insulating film with the conductor are kept Accordingly, the insulated wire of the present invention has excellent heat resistance and mechanical characteristics, and also produces an excellent effect of causing no decrease in the adhesion properties of the insulating film even upon exposure to the high temperature condition for a long time.

Specific examples of the resins and the reducing agents that can form the insulating film used for the insulated wire according to the present invention are similar to those used for the insulating paint, and preferred ranges are also similar to those for the insulating paint. Moreover, the preferred range of the reducing agent content is similar to that for the insulating paint.

The method of producing the insulated wire according to the present invention is not particularly limited, as long as the reducing agent having the boiling point of 160°C or higher is contained in the insulating film. Specific examples of the methods of forming the insulating film onto the insulated wire according to the present invention include a method for applying and baking insulating paint of the present invention onto a conductor; a method for applying insulating paint containing no reducing agent onto a conductor, and then spraying a gaseous reducing agent after or during baking the insulating paint applied; a method for forming an insulating film by applying and baking insulating paint containing a resin that can form the insulating film onto a conductor, and then applying and baking a reducing agent onto the insulating film; and a method for applying and baking a reducing agent onto a conductor, and further applying and baking insulating paint containing a resin that can form an insulating film. When these methods are applied, the adhesion force between the conductor and the insulating film of the insulated wire can be kept even upon exposure to the high temperature condition for a long time.

When the reducing agent is applied and baked onto the conductor or the insulating film, the reducing agent alone or a reducing agent composition may be sprayed onto the conductor or the insulating film. Alternatively, the conductor or a whole of the conductor provided with the insulating film may be immersed into the reducing agent composition. In this case, the concentration of the reducing agent in the reducing agent composition is not particularly limited, but is preferably 30% by weight or more so as to facilitate evaporation of a solvent of the reducing agent composition during baking. The solvent is not particularly limited, as long as the reducing agent is dissolved thereinto. For example, one having relatively high volatility, such as ethyl methyl ketone, acetone, ethyl acetate, methyl acetate, toluene, tetrahydrofuran, methanol, ethanol, isopropanol, chloroform, or dichloromethylene, is preferably used.

The reducing agent used in the insulated wire according to the present invention can produce the effect thereof even without applying and baking, onto the conductor or as any other layer, the insulating paint containing the reducing agent. In the present invention, the reducing agent having the boiling point of 160°C or higher may be directly applied onto the conductor, and thereon, a thermosetting resin layer containing no reducing agent may be formed. A method for applying the reducing agent is not particularly limited. Prior to application of a thermosetting resin varnish, spray coating of a reducing agent solution may be made onto the conductor, or the conductor may be immersed into the reducing agent solution. Alternatively, an insulating layer containing no reducing agent may be formed onto the conductor, and thereon, spray coating of the reducing agent solution may made, or the insulating layer formed may be immersed into the reducing agent solution.

In the present invention, the reducing agent may be applied alone as it is, or may be used after dilution with a highly-volatile organic solvent (for example, ethyl acetate, methanol, acetone, methyl ethyl ketone, chloroform, toluene, hexane, cyclohexane, or tetrahydrofuran). The concentration of the reducing agent is not particularly limited, but is preferably 5% to 80% by volume in view of allowing suppression of a strong odor of the reducing agent.

The insulated wire of the present invention preferably has at least one layer of the insulating film formed by applying and baking the insulating paint of the present invention. Such an insulating film may be arranged directly on the conductor, or may be arranged in the periphery of the conductor through any other layer.

In the insulated wire of the present invention, an adhesion layer containing an adhesion-improving agent, which is excellent in the adhesion properties with the conductor, may be formed. The adhesion layer can be formed by applying the thermosetting resin varnish for the adhesion layer onto the conductor, and hardening the varnish by baking. When such an adhesion layer is formed, in particular, the adhesion properties at an initial stage, more specifically, the adhesion properties of the insulating film in a step for forming the insulating film onto the conductor can be improved.

Examples of the thermosetting resin that can be used for the adherent layer include a polyimide, a polyurethane, a polyamideimide, a polyester, polybenzimidazole, a polyesterimide, a melamine resin, and an epoxy resin.

As the adhesion-improving agent, those ordinarily used as the adhesion-improving agents for the insulated wire may be used, such as a silane alkoxide-based adhesion-improving agent (silane coupling agent), a titanium-based adhesion-improving agent such as titanium alkoxide, titanium acylate, and titanium chelate, a triazine-based adhesion-improving agent, an imidazole-based adhesion-improving agent, a melamine-based adhesion-improving agent, a carbodiimide-based adhesion-improving agent, and a thiol-based adhesion-improving agent.

An addition amount of the adhesion-improving agent is not particularly limited, but is preferably 0.01% by mass or more, preferably 10% by mass or less, and preferably from 0.01% to 10% by mass, based on solid content of the resin. Moreover, a thickness of the adhesion layer is not particularly limited, but is preferably 1 µm or more.

In the present invention, the reducing agent that has the boiling point of 160°C or higher and is particularly easily oxidized at about 150°C to 250°C is used. Therefore, only when the insulated wire is exposed to the temperature range described above or higher, suppression is made with regard to formation of the oxide film to be formed by the reaction of the reducing agent with oxygen contained in the conductor.

When the adhesion-improving agent is contained in the film of the insulated wire, the adhesion layer containing the adhesion-improving agent should be directly come in contact with the conductor in order to form a coordinate bond between the adhesion-improving agent and a conductor metal so as to develop the adhesion force. Further, the reaction by the adhesion-improving agent is caused only in a solid state or a liquid state. In contrast, when the conductor is copper, for example, the reducing agent used in the present invention acts on copper oxide formed on a conductor surface in a liquid or gaseous state to cause action of reducing this to copper. Therefore, even if the reducing agent alone or the insulating layer containing the reducing agent is not directly in contact with the conductor surface, a gasified reducing agent only needs to penetrate into the resin constituting the insulating film and to reach the conductor surface. A gasification reaction of the reducing agent used in the present invention starts at about 140°C. Thus, growth of copper oxide on the conductor surface can be suppressed. Moreover, the reduction reaction by the reducing agent further easily progresses as the temperature to which the insulated wire is exposed is higher.

Further, baking of the insulating paint is affirmed that, even if baking is performed at 500°C or higher, a temperature of the insulating film does not rise to the temperature described above, and is less than 300°C while the solvent contained in the insulating paint is evaporated. Therefore, in consideration of this point, a baking temperature, a baking time, a kind of the reducing agent, a boiling point of the reducing agent, the content of the reducing agent, or the like may be appropriately set up, in the insulated wire of the present invention, so as to keep a remaining insulating film even after baking.

### EXAMPLES

The present invention will be described in more detail based on examples given below.

### (Example 1)

Into a 2L-separable flask, as a thermosetting resin varnish, 2,000 g of thermosetting polyester resin varnish (trade name: Neoheat 8200K2, manufactured by Totoku Toryo Co., Ltd., resin solid content: 40%) was put little by little, and as a solvent, 670 g of N,N'-dimethylacetamide was added thereto. The resultant mixture was stirred at room temperature, and thus a transparent dark brown insulating resin varnish for a layer to be brought in contact with a conductor was obtained.

Into another 2L-separable flask, as a thermosetting resin varnish, 2,000 g of thermosetting polyester resin varnish (trade name: Neoheat 8200K2, manufactured by Totoku Toryo Co., Ltd., resin solid content: 40%) was put little by little. Further, 19.2 g of citronellol was added thereto, the resultant mixture was stirred at room temperature, and thus transparent dark red insulating paint (for an outer layer) containing a reducing agent was obtained.

Onto a conductor (copper wire having a conductor diameter of 1 mm), the varnish for the layer to be brought in contact with the conductor was applied, and baking of the applied varnish was performed at 520°C for a transit time of 10 to 20 seconds in a hot-air circulating vertical furnace having a height of about 10 m, and thus a 8 µm-thick layer was formed. Further, the reducing agent-containing insulating paint was used, and baking of the paint applied was performed at 520°C for a transit time of 10 to 20 seconds in a hot-air circulating vertical furnace having a height of about 10 m, a reducing agent layer was formed thereon. Thus, an insulated wire having an insulating film thickness of 30 µm was prepared.

The cross-sectional view showing this insulated wire of Example 1 is shown in Fig. 1.

### (Reference Example 2)

Into a 2L-separable flask, as a thermosetting resin varnish, 2,000 g of polyamideimide resin varnish (trade name: HI-406 series, manufactured by Hitachi Chemical Co., Ltd., resin solid content: 32%) was put little by little. Further, 19.2 g of octanol was added thereto, and the resultant mixture was stirred at room temperature, and thus transparent dark brown and reducing agent-containing insulating paint was obtained.

Into another 2L-separable flask, as a thermosetting resin varnish, 2,000 g of polyamideimide resin varnish (trade name: HI-406 series, manufactured by Hitachi Chemical Co., Ltd., resin solid content: 32%) was put little by little. Further, 135 g of NMP (N-methyl-2-pyrrolidone) as a diluent solvent was added thereto, and the resultant mixture was stirred at room temperature, and thus transparent dark brown insulating paint for an outer layer was obtained.

Then, the prepared reducing agent-containing insulating paint was applied to a copper wire having a conductor diameter of 1 mm, and baking of the paint applied was performed at 520°C for a transit time of 10 to 20 seconds in a hot-air circulating vertical furnace having a height of about 10 m, and thus a reducing agent layer having a thickness of 8 µm was formed. Further, the insulating paint for the outer layer was applied and baked thereonto in a manner similar to the operations for preparing the reducing agent layer, an outer layer having a thickness of 22 µm was formed. Thus, an insulated wire having an insulating film thickness of 30 µm was prepared.

The cross-sectional view showing this insulated wire of Reference Example 2 is shown in Fig. 2.

### (Examples 4, 6 and 10 to 12, Reference Examples 3 and 8-9, and Comparative Examples 2 to 4)

Insulated wires were prepared in a manner similar to the operations in Reference Example 2 except that the thermosetting resin, the reducing agent, and the content of the reducing agent based on the solid content of the thermosetting resin were changed as shown in Tables 1 to 3.

The cross-sectional view showing this insulated wire of each of these Examples, Reference Examples and Comparative Examples is shown in Fig. 2.

### (Reference Example 5)

Into a 2L-separable flask, as a thermosetting resin varnish, 2,000 g of polyamideimide resin varnish (trade name: HI-406 series, manufactured by Hitachi Chemical Co., Ltd., resin solid content: 32%) was put little by little.
Further, 6.4 g of ascorbic acid was added thereto, and the resultant mixture was stirred at room temperature, and thus transparent dark brown and reducing agent-containing insulating paint for a layer to be brought in contact with a conductor was obtained.

Into another 2L-separable flask, as a thermosetting resin varnish, 2,000 g of polyamideimide resin varnish (trade name: HI-406 series, manufactured by Hitachi Chemical Co., Ltd., resin solid content: 32%) was put little by little. Further, 135 g of NMP as a diluent solvent, and 6.4 g of ascorbic acid were added thereto, and the resultant mixture was stirred at room temperature, and thus transparent dark brown and reducing agent-containing insulating paint for an outer layer was obtained.

Then, the prepared reducing agent-containing insulating paint for the layer to be brought in contact with the conductor was applied to a copper wire, and baking of the paint applied was performed at 520°C for a transit time of 10 to 20 seconds in a hot-air circulating vertical furnace having a height of about 10 m, and thus a reducing agent layer was formed. Further, the paint for the outer layer was applied and baked, an outer layer was formed thereon. Thus, an insulated wire having an insulating film thickness of 30 µm was prepared.

The cross-sectional view showing this insulated wire of Reference Example 5 is shown in Fig. 2.

### (Example 7)

An insulated wire was prepared in a manner similar to the operations in Reference Example 5 except that the reducing agent, and the content of the reducing agent based on the solid content of the thermosetting resin were changed as shown in Table 1.

The cross-sectional view showing this insulated wire of Example 7 is shown in Fig. 2.

### (Example 13)

Into a 2L-separable flask, as a thermosetting resin varnish, 2,000 g of polyamideimide resin varnish (trade name: HI-406 series, manufactured by Hitachi Chemical Co., Ltd., resin solid content: 32%) was put little by little, and as an adhesion-improving agent, 24 g of melamine resin (trade name: Super Beckamine, manufactured by DIC Corporation) was added thereto. The resultant mixture was stirred at room temperature, and thus a transparent dark brown and adhesion-improving agent-containing insulating resin varnish was obtained.

Into another 2L-separable flask, as a thermosetting resin varnish, 2,000 g of polyamideimide resin varnish (trade name: HI-406 series, manufactured by Hitachi Chemical Co., Ltd., resin solid content: 32%) was put little by little. Further, 19.2 g of linalool was added thereto, the resultant mixture was stirred at room temperature, and thus transparent dark red and reducing agent-containing insulating paint (for an intermediate layer) was obtained.

Into still another 2L-separable flask, as a thermosetting resin varnish, 2,000 g of polyamideimide resin varnish (trade name: HI-406 series, manufactured by Hitachi Chemical Co., Ltd., resin solid content: 32%) was put little by little, and as a diluent solvent, 135 g of NMP was further added thereto. The resultant mixture was stirred at room temperature, and thus a transparent dark brown insulating resin varnish for an outermost layer was obtained.

Then, the adhesion-improving agent-containing insulating resin varnish was applied to a copper wire of a conductor diameter of 1 mm, and baking of the applied varnish was performed at 520°C for a transit time of 10 to 20 seconds in a hot-air circulating vertical furnace having a height of about 10 m, and thus a 6 µm-thick adhesion layer was formed. Further, the reducing agent-containing insulating paint was applied and baked, and a reducing agent layer was formed thereon in a manner similar to the operations for preparing the adhesion layer. In addition, the insulating resin varnish for the outermost layer was further applied and baked, and an outermost layer was formed thereon in a manner similar to the operations for preparing the reducing agent layer. Thus, an insulated wire having an insulating film thickness of 30 µm was prepared.

The cross-sectional view showing this insulated wire of Example 13 is shown in Fig. 3.

### (Example 14)

As a thermosetting resin, a polyimide resin varnish (trade name: U-Varnish, manufactured by Ube Industries, Ltd., resin solid content: 20%) was applied onto a conductor having a conductor diameter of 1 mm, and baking of the applied varnish was performed at 520°C for a transit time of 10 to 20 seconds in a hot-air circulating vertical furnace having a height of about 10 m. Thus, an insulated wire having an insulating film thickness of 30 µm was prepared. Further, the insulated wire was immersed for about 1 second into a reducing agent solution prepared by diluting 150 g of citronellol with 500 g of ethyl acetate, and the ethyl acetate was removed by air drying.

Fig. 4 shows a cross-sectional view of an insulated wire according to Example 14.

### (Example 15)

An insulated wire having an insulating film thickness of 30 µm was obtained in a manner similar to the operations in Example 14 except that the reducing agent solution prepared by diluting 150 g of citronellol with 500 g of ethyl acetate was directly applied onto a conductor by spraying in place of immersing the insulated wire into the reducing agent solution.

The cross-sectional view showing this insulated wire of Example 15 is shown in Fig. 4.

### (Comparative Example 1)

Into a 2L-separable flask, as a thermosetting resin varnish, 2,000 g of polyamideimide resin varnish (trade name: HI-406 series, manufactured by Hitachi Chemical Co., Ltd., resin solid content: 32%) was put little by little. Further, 135 g of NMP as a diluent solvent was added thereto, and the resultant mixture was stirred at room temperature, and thus transparent dark brown insulating paint was obtained.

Then, the prepared insulating paint was applied to a copper wire having a conductor diameter of 1 mm, and baking of the paint applied was performed at 520°C for a transit time of 10 to 20 seconds in a hot-air circulating vertical furnace having a height of about 10 m. Further, the same insulating paint was used to form an outer layer. Thus, an insulated wire having an insulating film thickness of 30 µm was prepared.

### (Comparative Example 5)

An insulated wire having an insulating film thickness of 30 µm was obtained in a manner similar to the operations in Comparative Example 1 except that polyimide (trade name: U-Varnish, manufactured by Ube Industries, Ltd., resin solid content: 20%) was used as a thermosetting resin.

The following tests were conducted on the insulated wires in Examples 1, 4, 6-7 and 10 to 15, Reference Examples 2-3, 5 and 8-9, and Comparative Examples 1 to 5. The test results are represented in Tables 1 to 3.

### <Flexibility>

Flexibility was tested in accordance with the method of test for an enameled wire described in JIS C3003. Three test pieces having a suitable length were cut out from the insulated wires in Examples 1, 4, 6-7 and 10 to 15, Reference Examples 2-3, 5 and 8-9, and Comparative Examples 1 to 5, and when each of the test pieces was tightly wound 10 times around the test piece per se so as to bring the wires into contact with each other, generation on a film of a crack through which a conductor was visible was visually observed. One without generating the crack was rated as favorable (GOOD), and one with the crack generated was rated as poor (BAD).

### <Peel-twist>

A 30 cm-long test piece was cut from insulated wires before and after heat treatment at 210°C for 24 hours, and one end was fixed to a rotating machine and the other end was also fixed thereto. The fixed test piece was scratched from one point on a circumference of the test piece in a flow direction of the wire, and the rotating machine was started. Then, the number of rotations until the insulating film was cut was measured. As the number of rotations is greater, the adhesion force of the insulating film of the insulated wire is represented to be higher.

### <Peel strength after heat treatment>

A tension testing machine (in accordance with JIS B7721) was used, and a 180° peel strength test of an insulated wire was conducted. Insulated wires before and after heat treatment at 210°C for 24 hours were pressed using a press machine, and an insulating film was slit in a width of 1 mm. The insulating film having the slit part was fixed to the tension testing machine, and peel strength was measured at a rate of 20 mm/min at 25°C. As the strength is larger, the adhesion force of the insulating film of the insulated wire is represented to be higher.

### <Elongation breaking>

From insulated wires before and after heat treatment at 210°C for 24 hours, a 40 cm-long test piece was taken, and a 250 mm-long gage line was marked on a central part of the test piece. A tension testing machine (in accordance with JIS B7721) was used, and the test piece was subjected to tension at a rate of 200 mm/min at 25°C until the test piece broke, and a displacement of the gage line at break was measured as a measure of elongation of the insulated wire. Further, a length of a conductor exposed by shrinkage of the insulating film at break was observed as the adhesion force of the insulating film of the insulated wire. With regard to exposure of the conductor, one having a small number of adhered points to be cylindrical when the insulated wire was subjected to elongation was rated as poor (NG).

### <Measurement of oxide film thickness by reduction method>

Insulated wires before and after heat treatment at 210°C for 24 hours were slit in a width of 0.5 mm, and the slit insulated wire was immersed into a 0.1 mol/L potassium chloride aqueous solution, and an electric current of 5 mA was applied. A rate of recording a measurement was set to 20 mm/min. A thickness of an oxide film of the insulated wire was measured from electric power used for reduction of a conductor.

Herein, PAI, PEsI, and PI in Tables 1 to 3 represent those described below.
PAI: Polyamideimide resin varnish (trade name: HI-406 series, manufactured by Hitachi Chemical Co., Ltd., resin solid content: 32%).
PEsI: Thermosetting polyester resin varnish (trade name: Neoheat 8200K2, manufactured by Totoku Toryo Co., Ltd., resin solid content: 40%).
PI: Polyimide resin varnish (trade name: U-Varnish, manufactured by Ube Industries, Ltd., resin solid content: 20%).

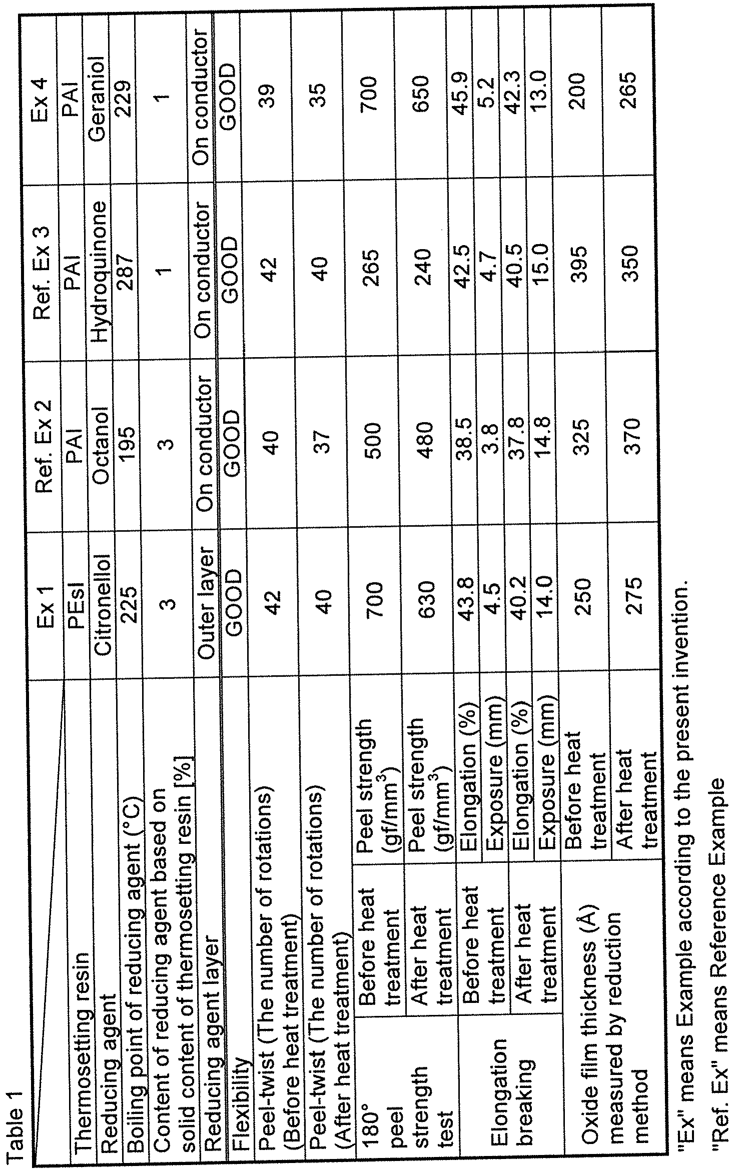

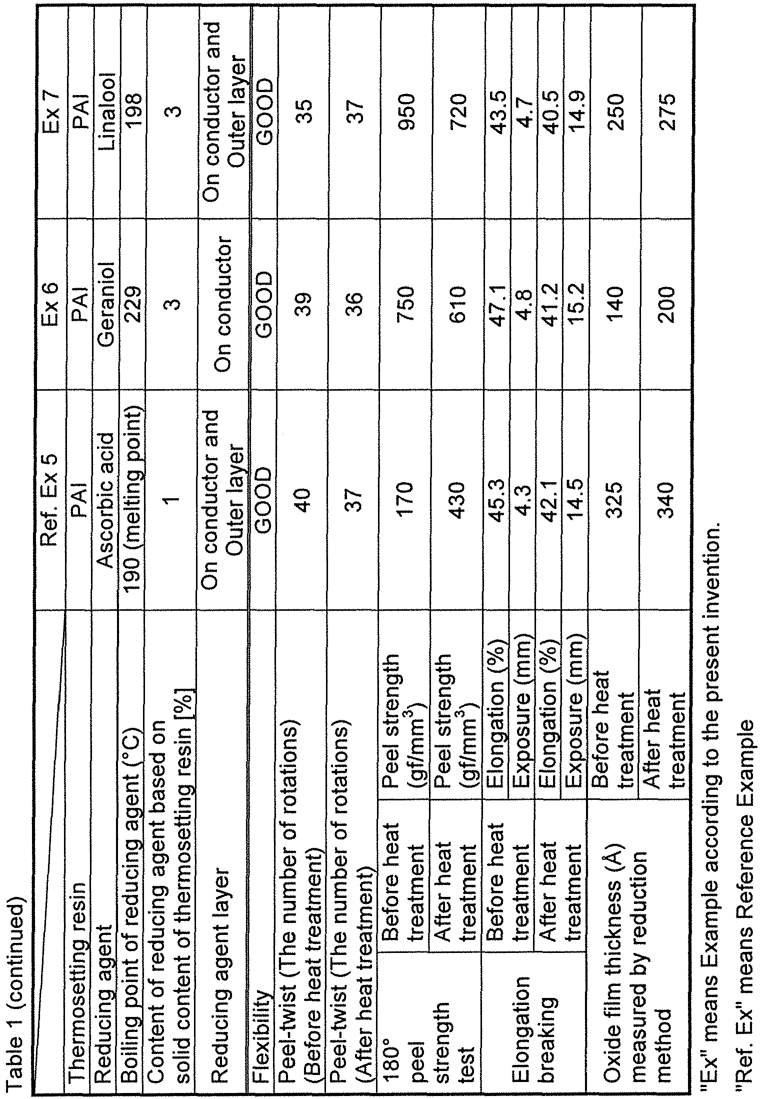

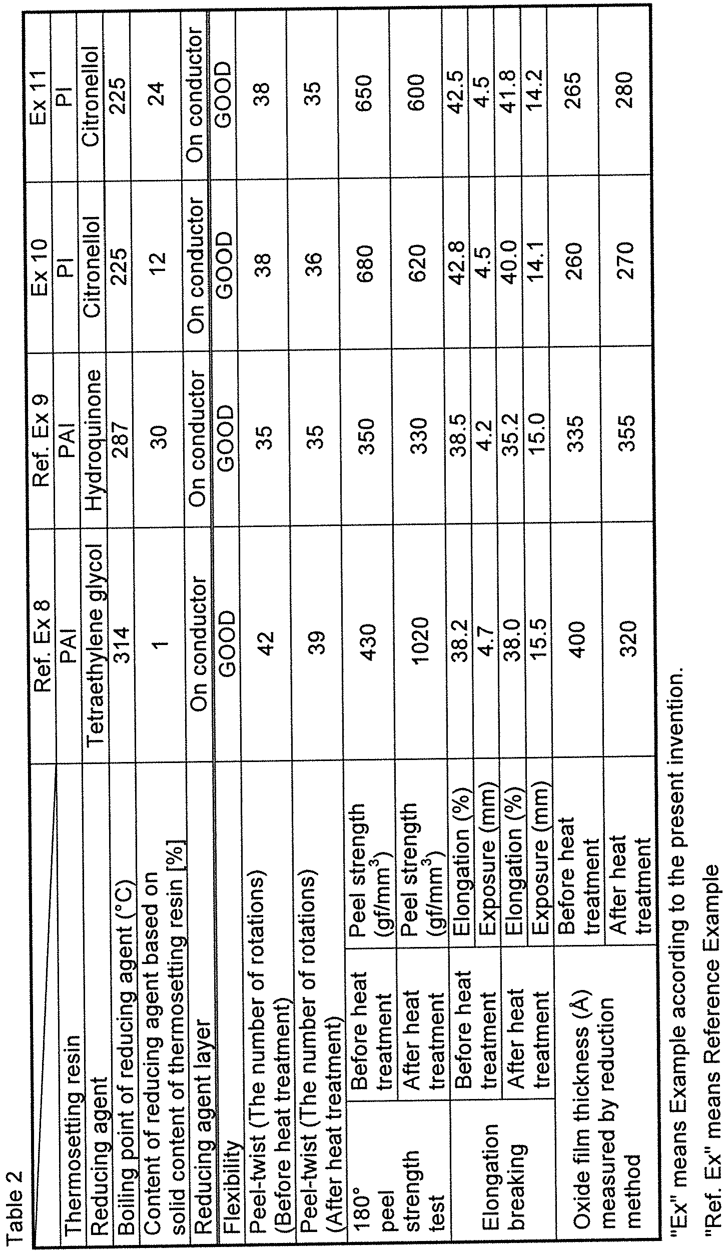

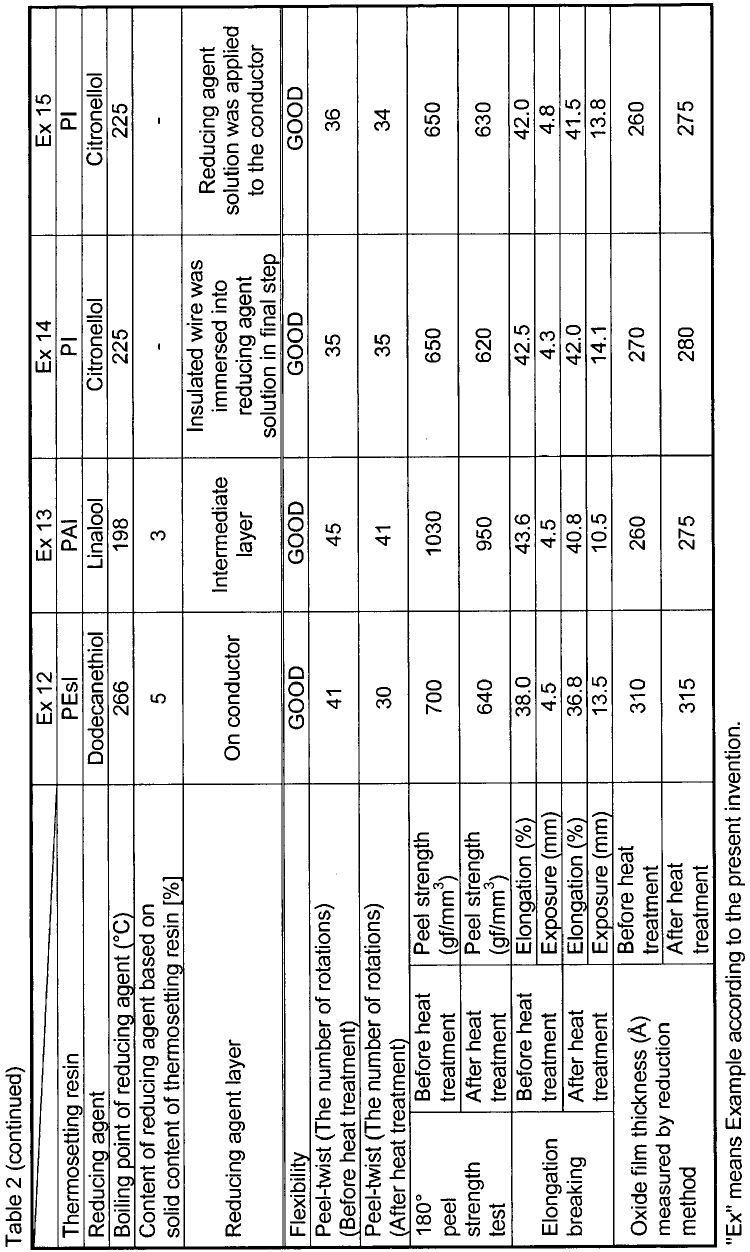

**Table 3**

| | | | C Ex 1 | C Ex 2 | C Ex 3 | C Ex 4 | C Ex 5 |
|---|---|---|---|---|---|---|---|
| Thermosetting resin | | | PAI | PAI | PAI | PAI | PI |
| Reducing agent | | | None | Hexanol | Dimethoxyethane | Cresol | None |
| Boiling point of reducing agent (°C) | | | - | 157 | 82 | 191 | - |
| Content of reducing agent based on solid content of thermosetting resin [%] | | | - | 3 | 3 | 3 | - |
| Reducing agent layer | | | None | On conductor | On conductor | On conductor | None |
| Flexibility | | | GOOD | BAD | BAD | GOOD | GOOD |
| Peel-twist (The number of rotations) (Before heat treatment) | | | 40 | 36 | 32 | 42 | 45 |
| Peel-twist (The number of rotations) (After heat treatment) | | | 6 | 2 | 5 | 7 | 5 |
| 180° peel strength test | Before heat treatment | Peel strength (gf/mm³) | 498 | 607 | 525 | 500 | 700 |
| | After heat treatment | Peel strength (gf/mm³) | 30 | 95 | 45 | 25 | 20 |
| Elongation breaking | Before heat treatment | Elongation (%) | 55.0 | 35.0 | 40.2 | 54.0 | 45.9 |
| | | Exposure (mm) | 4.3 | 4.3 | 4.6 | 4.3 | 5.2 |
| | After heat treatment | Elongation (%) | 30.0 | 12.0 | 14.8 | 12.5 | 42.3 |
| | | Exposure (mm) | 35.0 | NG | NG | NG | NG |
| Oxide film thickness (Å) measured by reduction method | | Before heat treatment | 235 | 300 | 425 | 395 | 280 |
| | | After heat treatment | 720 | 725 | 800 | 750 | 700 |

| | | | | | | | |
|---|---|---|---|---|---|---|---|
| "C Ex" means Comparative Example. | | | | | | | |

Tables 1 and 2 show that, in Examples according to the present invention, mechanical characteristics were excellent, prevention of oxidization of the conductor was allowed even after heat treatment for a long time, and a decrease in the adhesion force of the insulating film was suppressed.

In contrast, Table 3 shows that, in Comparative Example 1 and Comparative Example 5, no reducing agent was included in the insulating film, and therefore suppression was not allowed with regard to growth of the oxide film that was generated on the conductor in the high temperature condition, and adhesion of the insulating film decreased. In Comparative Example 2 and Comparative Example 3, the boiling point of the reducing agent was low, the low molecular weight component of the thermosetting resin reacted with the reducing agent in the temperature region in which the thermosetting resin was hardened, the molecular weight after baking decreased to inhibit a hardening reaction of the thermosetting resin, and thus strength of the insulating film after baking decreased. In Comparative Example 4, cresol having a non-reducible phenolic hydroxy group was used, and therefore regions were small in which adhesion was caused between the conductor and the insulating layer, and after heat treatment, poor adhesion as arisen from some sort of mechanical characteristics was caused.

### REFERENCE SIGNS LIST

1 Conductor
2 Insulating film containing a reducing agent
3 Insulating layer having no reducing agent
4 Insulating layer containing an adhesion-improving agent
10 Insulated wire

## Claims

1. Insulating paint, comprising:
a resin that can form an insulating film by application and baking; and
a reducing agent having a boiling point of 160°C or higher; wherein
the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

2. An insulated wire on which one layer of an insulating film or two or more layers of insulating films are formed by applying and baking, onto a conductor, insulating paint comprising a resin that can form the insulating film, wherein
a reducing agent having a boiling point of 160°C or higher is contained in at least one layer of the insulating films; wherein
the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

3. The insulating paint or the insulated wire according to Claim 1 or 2, wherein the content of the reducing agent is 1% by mass or more and 30% by mass or less based on solid content of the resin.

4. The insulating paint or the insulated wire according to any one of Claims 1 to 3, wherein the reducing agent is a compound having a reductive hydroxy group.

5. The insulating paint or the insulated wire according to any one of Claims 1 to 4, wherein the reducing agent is a terpenoid having a hydroxy group.

6. The insulating paint or the insulated wire according to any one of Claim 1 to 3, wherein the reducing agent is selected from the group consisting of citronellol, geraniol, linalool, and dodecanethiol.

7. The insulated wire according to any one of Claims 2 to 6, having at least one layer of an insulating film formed by applying and baking the insulating paint according to any one of Claims 1 and 3 to 6.

8. A method of producing an insulated wire, comprising a step for applying and baking insulating paint comprising a resin that can form an insulating film by application and baking onto a conductor, wherein
a reducing agent having a boiling point of 160°C or higher is contained in the insulating paint; wherein
the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

9. A method of producing an insulated wire, comprising steps of:
forming an insulating film onto a conductor by applying and baking insulating paint comprising a resin that can form the insulating film by application and baking; and applying and baking a reducing agent having a boiling point of 160°C or higher onto the insulating film; wherein
the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

10. A method of producing an insulated wire, comprising steps of:
applying and baking a reducing agent having a boiling point of 160°C or higher onto a conductor; and
forming an insulating film by applying and baking insulating paint comprising a resin that can form the insulating film by application and baking; wherein
the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

11. The method of producing an insulated wire according to any one of Claims 8 to 10, wherein the reducing agent is a compound having a reductive hydroxy group.

12. The method of producing an insulated wire according to any one of Claims 8 to 11, wherein the reducing agent is a terpenoid having a hydroxy group.

13. The method of producing an insulated wire according to any one of Claims 8 to 10, wherein the reducing agent is selected from the group consisting of citronellol, geraniol, linalool, and dodecanethiol.

14. Use of a reducing agent having a boiling point of 160°C or higher as an agent for suppressing growth of an oxide film to be generated on a conductor of an insulated wire; wherein the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

15. A method of suppressing growth of an oxide film to be generated on a conductor of an insulated wire by using a reducing agent having a boiling point of 160°C or higher; wherein
the reducing agent is selected from the group consisting of a primary alcohol, a secondary alcohol, a polyol, a primary thiol, a secondary thiol and saccharides, and wherein
the reducing agent is a compound having 10 or more carbon atoms in one molecule.

16. The use or method according to Claim 14 or 15, wherein the reducing agent is a compound having a reductive hydroxy group.

17. The use or method according to any one of Claims 14 to 16, wherein the reducing agent is a terpenoid having a hydroxy group.

18. The use or method according to Claim 14 or 15, wherein the reducing agent is selected from the group consisting of citronellol, geraniol, linalool, and dodecanethiol.

## Patentansprüche

1. Isolierfarbe, umfassend:
ein Harz, das durch Aufbringen und Brennen einen Isolierfilm bilden kann; und
ein Reduktionsmittel mit einem Siedepunkt von 160 °C oder höher, wobei das Reduktionsmittel ausgewählt ist aus der Gruppe, bestehend aus einem primären Alkohol, einem sekundären Alkohol, einem Polyol, einem primären Thiol, einem sekundären Thiol und Sacchariden, und wobei
das Reduktionsmittel eine Verbindung mit 10 oder mehr Kohlenstoffatomen in einem Molekül ist.

2. Isolierter Draht, auf dem eine Schicht eines Isolierfilms oder zwei oder mehr Schichten von Isolierfilmen gebildet sind, indem auf einen Leiter ein Isolierlack aufgebracht und gebrannt wird, der ein Harz umfasst,
das den Isolierfilm bilden kann, wobei
ein Reduktionsmittel mit einem Siedepunkt von 160 °C oder höher in mindestens einer Schicht der Isolierfilme enthalten ist, wobei
das Reduktionsmittel ausgewählt ist aus der Gruppe, bestehend aus einem primären Alkohol, einem sekundären Alkohol, einem Polyol, einem primären Thiol, einem sekundären Thiol und Sacchariden, und wobei
das Reduktionsmittel eine Verbindung mit 10 oder mehr Kohlenstoffatomen in einem Molekül ist.

3. Isolierfarbe oder isolierter Draht nach Anspruch 1 oder 2, wobei der Gehalt des Reduktionsmittels 1 Massen-% oder mehr und 30 Massen-% oder weniger beträgt, bezogen auf den Feststoffgehalt des Harzes.

4. Isolierfarbe oder isolierter Draht nach einem der Ansprüche 1 bis 3, wobei das Reduktionsmittel eine Verbindung mit einer reduktiven Hydroxygruppe ist.

5. Isolierfarbe oder isolierter Draht nach einem der Ansprüche 1 bis 4, wobei das Reduktionsmittel ein Terpenoid mit einer Hydroxygruppe ist.

6. Isolierfarbe oder isolierter Draht nach einem der Ansprüche 1 bis 3, wobei das Reduktionsmittel ausgewählt ist aus der Gruppe bestehend aus Citronellol, Geraniol, Linalool und Dodecanthiol.

7. Isolierter Draht nach einem der Ansprüche 2 bis 6 mit mindestens einer Schicht eines Isolierfilms, der durch Aufbringen und Brennen des Isolierlacks nach einem der Ansprüche 1 und 3 bis 6 gebildet ist.

8. Verfahren zur Herstellung eines isolierten Drahtes, umfassend einen Schritt zum Aufbringen und Brennen von Isolierfarbe, umfassend ein Harz, das durch Aufbringen und Brennen auf einen Leiter einen Isolierfilm bilden kann, wobei ein Reduktionsmittel mit einem Siedepunkt von 160 °C oder höher in der Isolierfarbe enthalten ist, wobei
das Reduktionsmittel ausgewählt ist aus der Gruppe, bestehend aus einem primären Alkohol, einem sekundären Alkohol, einem Polyol, einem primären Thiol, einem sekundären Thiol und Sacchariden, und wobei
das Reduktionsmittel eine Verbindung mit 10 oder mehr Kohlenstoffatomen in einem Molekül ist.

9. Verfahren zur Herstellung eines isolierten Drahtes, umfassend die folgenden Schritte:
Bilden eines Isolierfilms auf einem Leiter durch Aufbringen und Brennen von Isolierfarbe, die ein Harz umfasst, das den Isolierfilm durch Aufbringen und Brennen bilden kann;
und Aufbringen und Brennen eines Reduktionsmittels mit einem Siedepunkt von 160 °C oder höher auf den Isolierfilm, wobei
das Reduktionsmittel ausgewählt ist aus der Gruppe, bestehend aus einem primären Alkohol, einem sekundären Alkohol, einem Polyol, einem primären Thiol, einem sekundären Thiol und Sacchariden, und wobei
das Reduktionsmittel eine Verbindung mit 10 oder mehr Kohlenstoffatomen in einem Molekül ist.

10. Verfahren zur Herstellung eines isolierten Drahtes, umfassend die Schritte:
Aufbringen und Brennen eines Reduktionsmittels mit einem Siedepunkt von 160 °C oder höher auf einen Leiter; und
Bilden eines Isolierfilms durch Aufbringen und Brennen von Isolierfarbe, die ein Harz umfasst, das den Isolierfilm durch Aufbringen und Brennen bilden kann, wobei
das Reduktionsmittel ausgewählt ist aus der Gruppe, bestehend aus einem primären Alkohol, einem sekundären Alkohol, einem Polyol, einem primären Thiol, einem sekundären Thiol und Sacchariden, und wobei das Reduktionsmittel eine Verbindung mit 10 oder mehr Kohlenstoffatomen in einem Molekül ist.

11. Verfahren zur Herstellung eines isolierten Drahtes nach einem der Ansprüche 8 bis 10, wobei das Reduktionsmittel eine Verbindung mit einer reduktiven Hydroxygruppe ist.

12. Verfahren zur Herstellung eines isolierten Drahtes nach einem der Ansprüche 8 bis 11, wobei das Reduktionsmittel ein Terpenoid mit einer Hydroxygruppe ist.

13. Verfahren zur Herstellung eines isolierten Drahtes nach einem der Ansprüche 8 bis 10, wobei das Reduktionsmittel ausgewählt ist aus der Gruppe bestehend aus Citronellol, Geraniol, Linalool, und Dodecanthiol.

14. Verwendung eines Reduktionsmittels mit einem Siedepunkt von 160 °C oder höher als Mittel zur Unterdrückung des Wachstums von einem Oxidfilm, bevor der auf einem Leiter eines isolierten Drahtes gebildet wird, wobei
das Reduktionsmittel ausgewählt ist aus der Gruppe, bestehend aus einem primären Alkohol, einem sekundären Alkohol, einem Polyol, einem primären Thiol, einem sekundären Thiol und Sacchariden, und wobei das Reduktionsmittel eine Verbindung mit 10 oder mehr Kohlenstoffatomen in einem Molekül ist.

15. Verfahren zur Unterdrückung des Wachstums von einem Oxidfilm, bevor der auf einem Leiter eines isolierten Drahtes gebildet wird, unter Verwendung eines Reduktionsmittels mit einem Siedepunkt von 160 °C oder höher; wobei das
Reduktionsmittel ausgewählt ist aus der Gruppe bestehend aus einem primären Alkohol, einem sekundären Alkohol, einem Polyol, einem primären Thiol, einem sekundären Thiol und Sacchariden, und wobei
das Reduktionsmittel eine Verbindung mit 10 oder mehr Kohlenstoffatomen in einem Molekül ist.

16. Verwendung oder Verfahren nach einem der Ansprüche 14 oder 15, wobei das Reduktionsmittel eine Verbindung mit einer reduktiven Hydroxygruppe ist.

17. Verwendung oder Verfahren nach einem der Ansprüche 14 bis 16, wobei das Reduktionsmittel ein Terpenoid mit einer Hydroxygruppe ist.

18. Verwendung oder Verfahren nach einem der Ansprüche 14 oder 15, wobei das Reduktionsmittel ausgewählt ist aus der Gruppe bestehend aus Citronellol, Geraniol, Linalool, und Dodecanthiol.

## Revendications

1. Peinture isolante comprenant:
une résine capable de former un film isolant en appliquant et en chauffant; et
un agent réducteur ayant un point d'ébullition de 160 °C ou supérieur, dans lequel l'agent réducteur est choisi dans le groupe comprenant un alcool primaire, un alcool secondaire, un polyole, un thiol primaire, un thiol secondaire et des saccharides, et dans lequel
l'agent réducteur est un composé ayant 10 atomes de carbone ou plus dans une molécule.

2. Fil isolé sur lequel est formée une couche d'un film isolant ou deux ou plusieurs couches de films isolants en appliquant et en chauffant une peinture isolante sur un conducteur, comprenant
une résine capable de former le film isolant, dans lequel un agent réducteur ayant un point d'ébullition de 160 °C ou plus est contenu dans au moins une couche des films isolants, dans
lequel l'agent réducteur est choisi dans le groupe constitué par un alcool primaire, un alcool secondaire, un polyol, un thiol primaire, un thiol secondaire et des saccharides, et dans
lequel l'agent réducteur est un composé ayant 10 atomes de carbone ou plus dans une molécule.

3. Peinture isolante ou fil isolé selon la revendication 1 ou 2, dans laquelle la teneur en agent réducteur est de 1% en masse ou plus et de 30% en masse ou moins, sur la base de la teneur en solides de la résine.

4. Peinture isolante ou fil isolé selon l'une quelconque des revendications 1 à 3, dans lequel l'agent réducteur est un composé ayant un groupe hydroxy réducteur.

5. Peinture isolante ou fil isolé selon l'une quelconque des revendications 1 à 4, dans lesquels l'agent réducteur est un terpénoïde ayant un groupe hydroxy.

6. Peinture isolante ou fil isolé selon l'une quelconque des revendications 1 à 3, dans lequel l'agent réducteur est choisi dans le groupe constitué par le citronellol, le géraniol, le linalol et le dodécanethiol.

7. Fil isolé selon l'une quelconque des revendications 2 à 6, avec au moins une couche d'un film isolant, qui est formé par application et chauffage de la peinture isolante selon l'une quelconque des revendications 1 et 3 à 6.

8. Procédé de production d'un fil isolé, comprenant une étape d'application et de chauffage d'une peinture isolante, comprenant une résine capable de former un film isolant par application et chauffage sur un conducteur, dans laquelle un agent réducteur ayant un point d'ébullition de 160 °C ou plus est contenu dans la peinture isolante, dans laquelle
l'agent réducteur est choisi dans le groupe constitué par un alcool primaire, un alcool secondaire, un polyol, un thiol primaire, un thiol secondaire et des saccharides, et dans lequel
l'agent réducteur est un composé ayant 10 atomes de carbone ou plus dans une molécule.

9. Procédé de production d'un fil isolé, comprenant les étapes consistant à:
former un film isolant sur un conducteur en appliquant et en chauffant une peinture isolante, comprenant une résine capable de former le film isolant en appliquant et en chauffant;
et appliquer et chauffer un agent réducteur ayant un point d'ébullition de 160 °C ou plus sur le film isolant, l'agent réducteur est choisi dans le groupe constitué par un alcool primaire, un alcool secondaire, un polyol, un thiol primaire, un thiol secondaire et des saccharides, et dans laquelle
l'agent réducteur est un composé ayant 10 atomes de carbone ou plus dans une molécule.

10. Procédé de production d'un fil isolé, comprenant les étapes consistant à:
appliquer et chauffer un agent réducteur ayant un point d'ébullition de 160 °C ou plus sur un conducteur;
et former un film isolant en appliquant et en chauffant une peinture isolante comprenant une résine capable de former le film isolant en appliquant et en chauffant, dans laquelle
l'agent réducteur est choisi dans le groupe constitué par un alcool primaire, un alcool secondaire, un polyol, un thiol primaire, un thiol secondaire et des saccharides, et dans lequel
l'agent réducteur est un composé ayant 10 atomes de carbone ou plus dans une molécule.

11. Procédé de production d'un fil isolé selon l'une quelconque des revendications 8 à 10, dans lequel l'agent réducteur est un composé ayant un groupe hydroxy réducteur.

12. Procédé de production d'un fil isolé selon l'une quelconque des revendications 8 à 11, dans lequel l'agent réducteur est un terpénoïde ayant un groupe hydroxy.

13. Procédé de production d'un fil isolé selon l'une quelconque des revendications 8 à 10, dans lequel l'agent réducteur est choisi dans le groupe constitué par le citronellol, le géraniol, le linalol et le dodécanethiol.

14. Utilisation d'un agent réducteur ayant un point d'ébullition de 160 °C ou plus en tant qu'agent destiné à supprimer la croissance d'un film d'oxyde devant être formé sur un conducteur d'un fil isolé, dans laquelle
l'agent réducteur est choisi dans le groupe constitué par un alcool primaire, un alcool secondaire, un polyol, un thiol primaire, un thiol secondaire et des saccharides, et dans laquelle
l'agent réducteur est un composé ayant 10 atomes de carbone ou plus dans une molécule.

15. Procédé pour supprimer la croissance d'un film d'oxyde devant être formé sur un conducteur d'un fil isolé en utilisant un agent réducteur ayant un point d'ébullition de 160 °C ou plus; dans lequel
l'agent réducteur est choisi dans le groupe constitué par un alcool primaire, un alcool secondaire, un polyol, un thiol primaire, un thiol secondaire et des saccharides, et dans lequel
l'agent réducteur est un composé ayant 10 atomes de carbone ou plus dans une molécule.

16. Utilisation ou procédé selon l'une des revendications 14 ou 15, dans lesquels l'agent réducteur est un composé ayant un groupe hydroxy réducteur.

17. Utilisation ou procédé selon l'une quelconque des revendications 14 à 16, dans lesquels l'agent réducteur est un terpénoïde ayant un groupe hydroxy.

18. Utilisation ou procédé selon l'une des revendications 14 ou 15, dans lesquels l'agent réducteur est choisi dans le groupe constitué par le citronellol, le géraniol, le linalol et le dodécanethiol.
